# EUROPÄISCHE PATENTSCHRIFT

(11) **EP 3 010 745 B1**
(45) Veröffentlichungstag und Bekanntmachung des Hinweises auf die Patenterteilung: **28.02.2018**
(21) Anmeldenummer: 14734739.7
(22) Anmeldetag: 17.06.2014
(51) Int. Cl.: B60K 31/00, B60L 15/10, B60W 30/00, G05D 1/02, B62D 1/04, B62D 15/02, B60W 30/18, B60K 26/02, B60W 50/00

(54) **KRAFTFAHRZEUG**
VEHICLE
VÉHICULE

(30) Priorität: 21.06.2013 DE 102013010452
(43) Veröffentlichungstag der Anmeldung: 27.04.2016
(73) Patentinhaber: Audi AG, 85045 Ingolstadt (DE)
(72) Erfinder: ROTH, Erwin, 85283 Wolnzach (DE); LEINFELDER, Rudolf, 85072 Eichstätt (DE); BURGER, Matthias, 85092 Kösching (DE); HAMMES, Ulrich, 85088 Vohburg (DE); CHEN, Chao, 80809 München (DE); LENZ, David, 81545 München (DE); MINNERUP, Pascal, 80333 München (DE)
(74) Vertreter: Thielmann, Frank
(86) Internationale Anmeldenummer: PCT/EP2014/001641
(87) Internationale Veröffentlichungsnummer: WO 2014/202206

(56) Entgegenhaltungen:
- US-A1- 2002 177 935
- US-A1- 2003 055 538
- US-A1- 2009 287 367

## Beschreibung

Die Erfindung betrifft ein Kraftfahrzeug, umfassend eine Steuereinrichtung, die zur Steuerung einer zumindest teilautomatisierten Längs- und/oder Querführung des Kraftfahrzeugs im Rahmen eines bestimmten Fahrmanövers ausgebildet ist, und wenigstens ein Bedienelement, das zur Kommunikation mit der Steuereinrichtung und zur Gabe von die zumindest teilautomatisierte Längs- und/oder Querführung betreffenden Steuerinformationen an die Steuereinrichtung ausgebildet ist, wobei die Steuereinrichtung derart eingerichtet ist, dass über eine bedienerseitige erste Bedienhandlung am Bedienelement eine Aktivierung oder eine Deaktivierung der Längs- und/oder Querführung steuerbar ist und über eine, insbesondere von der ersten Bedienhandlung unterschiedliche, zusätzliche bedienerseitige zweite Bedienhandlung am Bedienelement wenigstens ein die durch die Steuereinrichtung gesteuerte Längs- und/oder Querführung des Kraftfahrzeugs beeinflussender Fahrparameter änderbar ist.

Kraftfahrzeuge mit derartigen Steuereinrichtungen, welche insbesondere in entsprechenden Fahrerassistenzsystemen zur Längs- und/oder Querführung eines Kraftfahrzeugs implementiert sind, sind an und für sich bekannt. Die Längs- und/oder Querführung des Kraftfahrzeugs wird dabei üblicherweise über ein mit der Steuereinrichtung kommunizierendes Bedienelement gesteuert, über welches entsprechende Steuerinformationen an die Steuereinrichtung gegeben werden.

Im Rahmen der über das Bedienelement erfolgenden Steuerung der Längs- und/oder Querführung ist es regelmäßig notwendig, dass ein Bediener eine bestimmte Bedienhandlung an oder mit dem Bedienelement ausführt. Beispielsweise kann es erforderlich sein, dass ein Bediener kontinuierlich eine bedienelementseitige Taste betätigt, um entsprechende Steuerinformationen an die Steuereinrichtung zu übermitteln, auf Basis welcher die Längs- und/oder Querführung aktiviert wird bzw. aktiviert bleibt. Die Durchführung der Längs- und/oder Querführung ist im Weiteren also unmittelbar an die Bedienhandlung durch den Bediener geknüpft. Beendet oder unterbricht dieser die Bedienhandlung, d. h. z. B.. dass der Bediener in dem vorgenannten Beispiel die Betätigung der Taste aufhebt, wird die Längs- und/oder Querführung sofort unterbrochen.

Abgesehen von der Möglichkeit der Unterbrechung der Längs- und/oder Querführung ist dem Bediener bis dato keine Möglichkeit gegeben, den Betrieb der Längs- und/oder Querführung während ihrer Durchführung über das Bedienelement zu beeinflussen.

Ein Kraftfahrzeug der eingangs genannten Art, das die Merkmale des Oberbegriffs der Patentansprüche 1 und 11 aufweist, ist aus US 2002/0177935 A1 bekannt.

Der Erfindung liegt damit die Aufgabe zugrunde, ein Kraftfahrzeug mit einer Steuereinrichtung zur zumindest teilautomatisierten Längs- und/oder Querführung anzugeben, welches eine Beeinflussung des Betriebs der Längs- und/oder Querführung während ihrer Durchführung ermöglicht.

Die Aufgabe wird durch ein Kraftfahrzeug der eingangs genannten Art gelöst, welches sich dadurch auszeichnet, dass das Bedienelement ein eine Rückstellkraft gegen die zweite Bedienhandlung ausbildendes Rückstellmittel umfasst, wobei die Rückstellkraft in Abhängigkeit einer durch eine mit der Steuereinrichtung kommunizierende Fahrzeugumfeldsensorik, insbesondere während des Fahrmanövers, erfassten Fahrzeugumfeldinformation variierbar ist und/oder
dass das Bedienelement ein Ausgabemittel zur Ausgabe akustischer und/oder haptischer und/oder optischer Signale umfasst oder das Bedienelement zur Steuerung wenigstens eines kraftfahrzeugseitigen Ausgabemittels zur Ausgabe akustischer und/oder haptischer und/oder optischer Signale ausgebildet ist, wobei die Signale in Abhängigkeit einer durch eine oder die mit der Steuereinrichtung kommunizierende Fahrzeugumfeldsensorik erfassten Fahrzeugumfeldinformation ausgebbar sind, wobei die Intensität der Signale in Abhängigkeit der Fahrzeugumfeldinformation variierbar ist.

Das erfindungsgemäße Prinzip schlägt ein Kraftfahrzeug mit einer Steuereinrichtung zur zumindest teilautomatisierten Längs- und/oder Querführung des Kraftfahrzeugs im Rahmen eines bestimmten Fahrmanövers vor. Unter einem entsprechenden Fahrmanöver ist z. B. ein Parkvorgang verstehen. Das Prinzip lässt sich jedoch auch auf andere, mit einer zumindest teilautomatisierten Längs- und/oder Querführung bewerkstelligbare Fahrmanöver übertragen. Kern der Erfindung ist die besondere Möglichkeit der Steuerung der Längs- und/oder Querführung. Erfindungsgemäß ist es vorgesehen, dass über das Bedienelement nicht allein die Aktivierung bzw. Deaktivierung der Längs- und/oder Querführung, sondern zusätzlich, d. h. insbesondere auch während der Durchführung der Längs- und/oder Querführung, die Möglichkeit einer Einflussnahme auf die Längs- und/oder Querführung, d. h. insbesondere auf wenigstens einen diese beeinflussenden Fahrparameter, gegeben ist. Die Längs- und/oder Querführung des Kraftfahrzeugs kann demnach durch eine während ihrer Durchführung erfolgende Änderung bzw. Beeinflussung entsprechender Fahrparameter an das subjektive Sicherheitsempfinden des Bedieners, d. h. insbesondere des Fahrers, angepasst werden.

Hierzu ist die Steuereinrichtung, welche grundsätzlich einen Teil eines Fahrerassistenzsystems zur zumindest teilautomatisierten Längs- und/oder Querführung darstellen kann, derart eingerichtet, dass über eine erste Bedienhandlung am oder mit dem Bedienelement eine Aktivierung oder Deaktivierung der Längs- und/oder Querführung erfolgt und über eine zweite Bedienhandlung am oder mit dem Bedienelement eine Änderung oder Beeinflussung zumindest eines Fahrparameters im Rahmen der durch die Steuereinrichtung erfolgenden Steuerung der Längs- und/oder Querführung herbeiführbar ist.

Die bedienerseitig ausgeführten Bedienhandlungen am oder mit dem Bedienelement werden von der Steuereinrichtung oder einer dieser zugehörigen Sensorik sonach erfasst oder erfasste Bedienhandlungen an die Steuereinrichtung übermittelt, von der Steuereinrichtung bewertet und entsprechend in eine Aktivierung bzw. Deaktivierung der Längs- und/oder Querführung des Kraftfahrzeugs oder im Weiteren in eine Änderung bzw. Beeinflussung eines entsprechenden Fahrparameters umgesetzt.

Zwischen dem Bedienelement und der Steuereinrichtung besteht eine Kommunikationsverbindung, so dass die am Bedienelement ausgeführten Bedienhandlungen von der Steuereinrichtung erkannt und verarbeitet werden können. Allgemein ist oder umfasst das Bedienelement sonach eine Schnittstelle zwischen der Steuereinrichtung und einem Bediener, über welche Schnittstelle entsprechende bedienerseitig am oder mit Bedienelement gegebene, die zumindest teilautomatisierte Längs- und/oder Querführung betreffende Steuerinformationen (Steuerbefehle) an die Steuereinrichtung übermittelt werden können.

Sowohl die erste Bedienhandlung als auch die zweite Bedienhandlung sind demnach von einem Bediener, d. h. insbesondere dem Fahrer, durchzuführen. Unter einer Bedienhandlung ist typischerweise eine bestimmte Handlung eines Bedieners am oder mit dem Bedienelement zu verstehen. Eine Bedienhandlung betrifft also insbesondere bedienerseitige Betätigungen und/oder Bewegungen des Bedienelements oder an dem Bedienelement vorgesehener Bedienabschnitte.

Die zweite Bedienhandlung ist zusätzlich zu der ersten Bedienhandlung durchzuführen. Dies ergibt sich daraus, dass an die erste Bedienhandlung die Aktivierung bzw. Deaktivierung der Längs- und/oder Querführung geknüpft ist. Nur bei Durchführen der ersten Bedienhandlung ist die Längs- und/oder Querführung aktiviert, so dass auch nur unter dieser Bedingung eine Änderung oder Beeinflussung eines entsprechenden Fahrparameters mittels der zweiten Bedienhandlung möglich ist. Wird die erste Bedienhandlung nicht mehr aus- oder durchgeführt, wird die Längs- und/oder Querführung sofort unterbrochen.

Die zweite Bedienhandlung ist in der Regel unterschiedlich von der ersten Bedienhandlung. Die Bedienhandlungen können sich sonach z. B. auf unterschiedliche Freiheitsgrade einer Betätigung oder Bewegung des Bedienelements oder an dem Bedienelement vorgesehener Bedienabschnitte beziehen. Beispielsweise kann eine erste Bedienhandlung einen translatorischen Bewegungsfreiheitsgrad und eine zweite Bedienhandlung einen rotatorischen Bewegungsfreiheitsgrad des Bedienelements betreffen.

Denkbar ist es jedoch auch, dass sich die Bedienhandlungen ähneln, d. h. insbesondere gleichartig oder gleichgerichtet sind. Es ist also beispielsweise möglich, dass eine erste Bedienhandlung als eine Bewegung des Bedienelements ausgehend von einer Ausgangsstellung in eine erste Bedienposition und eine zweite Bedienhandlung eine gleichartige und gleichgerichtete, weitere Bewegung des Bedienelements ausgehend von der ersten Bedienposition ist. Die zweite Bedienhandlung kann dabei insbesondere dadurch gekennzeichnet sein, dass durch sie eine Bewegung des Bedienelements ausgehend von einer ersten Bedienposition in eine zweite Bedienposition erfolgt.

Bei dem über die zweite Bedienhandlung änderbaren bzw. beeinflussbaren Fahrparameter kann es sich z. B. um die Fahrgeschwindigkeit des Kraftfahrzeugs im Rahmen der zumindest teilautomatisierten Längs- und/oder Querführung handeln. Denkbar ist es jedoch auch, dass der Fahrparameter ein bestimmtes Geschwindigkeitsprofil, mit dem im Rahmen der Längs- und/oder Querführung ein bestimmtes Fahrmanöver abzufahren ist, betrifft.

Das Bedienelement kann kraftfahrzeugseitig verbaut sein. Das Bedienelement ist in diesem Fall mechanisch mit dem Kraftfahrzeug verbunden. Die Anordnung des Bedienelements ist hier typischerweise innerhalb des Kraftfahrzeugs. Die Anordnung und Ausrichtung des Bedienelements ist zweckmäßig derart gewählt, dass das Bedienelement von einem Bediener gut zu bedienen, d. h. insbesondere mit der Hand des Bedieners gut zu erreichen ist. Das Bedienelement kann sonach beispielsweise in der Mittelkonsole eines Kraftfahrzeugs angeordnet sein.

Alternativ oder, gegebenenfalls, ergänzend kann das oder ein Bedienelement auch portabel sein. Das Bedienelement ist in diesem Fall nicht mechanisch mit dem Kraftfahrzeug verbunden, sondern wird von einem Bediener getragen. Zwischen dem Bedienelement und dem Kraftfahrzeug besteht eine Kommunikationsverbindung. Das Bedienelement ist hier typischerweise in ein bedienerseitiges, d. h. von einem Bediener getragenes, elektronisches Gerät integriert. Bei dem elektronischen Gerät kann es sich beispielsweise um ein eine mobile Sende- und/oder Empfangseinrichtung aufweisendes Gerät, wie z. B. ein Mobiltelefon, ein Smartphone, ein Tablet bzw. Tablet-Computer, einen Funkschlüssel etc., handeln.

Im Weiteren sollen beispielhafte erste und zweite bedienerseitige Bedienhandlungen sowie damit zusammenhängende zweckmäßige Ausführungsbeispiele des Bedienelements erläutert werden.

Beispielsweise kann die erste Bedienhandlung eine translatorische Bewegung des Bedienelements entlang einer Translationsachse ausgehend von einer Ausgangsposition in eine erste Bedienposition und die zweite Bedienhandlung eine Drehbewegung des in der ersten Bedienposition befindlichen Bedienelements um die Translationsachse oder eine andere Drehachse sein. In diesem Ausführungsbeispiel ist oder umfasst das Bedienelement bevorzugt ein so genanntes Dreh-Drück-Stellelement, d. h. ein Stellelement, das sich in zwei unterschiedlichen Freiheitsgraden, d. h. einerseits translatorisch, andererseits rotatorisch, bewegen lässt.

In diesem Ausführungsbeispiel unterscheiden sich die beiden Bedienhandlungen. Die erste Bedienhandlung ist eine Translation des Bedienelements entlang einer Translationsachse ausgehend von einer Ausgangsposition in eine erste Bedienposition. Die zweite Bedienhandlung ist eine Rotation des in der ersten Bedienposition befindlichen Bedienelements um eine Drehachse, bevorzugt die Translationsachse, im oder gegen den Uhrzeigersinn. Mithin bedingt eine translatorische Bewegung des Bedienelements entlang der Translationsachse ausgehend von der Ausgangsposition in die erste Bedienposition eine Aktivierung der Längs- und/oder Querführung. Die erste Bedienhandlung kann sonach insbesondere durch ein Drücken des Bedienelements erfolgen. Die Änderung bzw. Beeinflussung des Fahrparameters erfolgt durch eine rotatorische Bewegung des in der ersten Bedienposition befindlichen Bedienelements um eine Drehachse, insbesondere die Translationsachse, im oder gegen den Uhrzeigersinn. Die zweite Bedienhandlung kann sonach insbesondere durch ein Drehen des gedrückten Bedienelements erfolgen.

Es ist auch möglich, dass die erste Bedienhandlung eine translatorische Bewegung des Bedienelements entlang einer Translationsachse ausgehend von einer Ausgangsposition in eine erste Bedienposition und die zweite Bedienhandlung eine gleichgerichtete, weitere translatorische Bewegung des Bedienelements entlang der Translationsachse ausgehend von der ersten Bedienposition ist. In diesem Ausführungsbeispiel ist oder umfasst das Bedienelement bevorzugt ein so genanntes Drück-Stellelement, d. h. ein Stellelement, das sich in einem oder mehreren translatorischen Freiheitsgraden bewegen lässt. Selbstverständlich lässt sich dieses Ausführungsbeispiel auch über ein vorstehend genanntes Dreh-Drück-Stellelement realisieren.

Die beiden Bedienhandlungen sind in diesem Ausführungsbeispiel insoweit ähnlich, als es sich bei beiden um eine translatorische Bewegung entlang derselben Translationsachse handelt. Der Unterschied zwischen den Bedienhandlungen besteht in den Startpunkten der jeweiligen translatorischen Bewegungen. Der Startpunkt für die erste Bedienhandlung ist die Ausgangsposition des Bedienelements, der Startpunkt für die zweite Bedienhandlung ist die erste Bedienposition. Die erste Bedienhandlung ist demnach eine Translation des Bedienelements ausgehend von der Ausgangsposition in die erste Bedienposition. Die zweite Bedienhandlung ist eine gleichgerichtete, weitere Translation des Bedienelements ausgehend von der ersten Bedienposition. Die zweite Bedienhandlung kann in eine zweite Bedienposition führen, so dass die zweite Bedienhandlung nur bei Erreichen der zweiten Bedienposition als solche erkannt und entsprechend umgesetzt wird. Mithin bedingt eine translatorische Bewegung des Bedienelements entlang der Translationsachse ausgehend von der Ausgangsposition in die erste Bedienposition eine Aktivierung der Längs- und/oder Querführung. Die erste Bedienhandlung kann sonach insbesondere durch ein Drücken des Bedienelements erfolgen. Die Änderung bzw. Beeinflussung des Fahrparameters erfolgt durch eine gleichgerichtete, weitere translatorische Bewegung des Bedienelements entlang der Translationsachse ausgehend von der ersten Bedienposition. Die zweite Bedienhandlung kann sonach insbesondere durch ein gleichgerichtetes, weiteres Drücken des Bedienelements, gegebenenfalls mit erhöhter Kraftaufbringung, erfolgen. Die zweite Bedienhandlung kann, wie erwähnt, ein Drücken des Bedienelements bis in eine zweite Bedienposition erfordern.

Es ist ferner denkbar, dass die erste Bedienhandlung eine translatorische Bewegung eines Bedienabschnitts des Bedienelements entlang einer Translationsachse ausgehend von einer Ausgangsposition in eine erste Bedienposition und die zweite Bedienhandlung eine Schwenkbewegung des Bedienelements mit in der ersten Bedienposition befindlichem Bedienabschnitt um einen Lagerpunkt ausgehend von einer Ausgangsposition ist. In diesem Ausführungsbeispiel ist oder umfasst das Bedienelement bevorzugt ein Hebelelement mit einem daran angeordneten, translatorisch bewegbaren Bedienabschnitt. Das Bedienelement ist sonach ein um eine, insbesondere durch einen Lagerpunkt gebildete, Schwenkachse verschwenkbares Stellelement mit einem daran translatorisch bewegbaren Bedienabschnitt. Ein erster Freiheitsgrad besteht in der Translation des Bedienabschnitts des Bedienelements, ein zweiter Freiheitsgrad besteht in der Schwenkbewegung des gesamten Bedienelements.

In diesem Ausführungsbeispiel unterscheiden sich die beiden Bedienhandlung ähnlich wie bei dem erstgenannten Ausführungsbeispiel. Die erste Bedienhandlung ist eine Translation des an dem Bedienelement translatorisch bewegbar angeordneten Bedienabschnitts entlang einer Translationsachse ausgehend von einer Ausgangsposition in eine erste Bedienposition. Die zweite Bedienhandlung ist eine Schwenkbewegung des Bedienelements mit in der ersten Bedienposition befindlichem Bedienabschnitt um einen Lagerpunkt ausgehend von einer Ausgangsposition. Die Schwenkbewegung des Bedienelements kann auch hier in eine zweite Bedienposition führen, so dass die zweite Bedienhandlung nur bei Erreichen der zweiten Bedienposition als solche erkannt und entsprechend umgesetzt wird. Mithin bedingt eine translatorische Bewegung des Bedienabschnitts entlang der Translationsachse ausgehend von der Ausgangsposition in die erste Bedienposition eine Aktivierung der Längs- und/oder Querführung. Die erste Bedienhandlung kann sonach insbesondere durch Drücken eines als Knopf, Taste oder dergleichen ausgebildeten Bedienabschnitts erfolgen. Die Änderung bzw. Beeinflussung des Fahrparameters erfolgt durch eine Schwenkbewegung des Bedienelements mit in der ersten Bedienposition befindlichem Bedienabschnitt um einen dieses lagernden Lagerpunkt. Die zweite Bedienhandlung kann sonach insbesondere durch ein Verschwenken des Bedienelements um den Lagerpunkt mit gedrücktem Bedienabschnitt erfolgen.

Die vorstehend beschriebenen Ausführungsbeispiele beziehen sich insbesondere auf ein kraftfahrzeugseitig verbautes Bedienelement in Form eines Dreh-Drück-Stellelements, Drück-Stellelements oder Hebelelements. Wie erwähnt, kann das Bedienelement beispielsweise im Bereich der Mittelkonsole angeordnet sein.

Die erste Bedienhandlung kann auch eine Bewegung auf eine erste Bedienposition auf einer berührungssensitiven Bedienfläche eines Bedienelements und die zweite Bedienhandlung eine von der ersten Bedienposition ausgehende Bewegung entlang der Bedienfläche sein. In diesem Ausführungsbeispiel ist oder umfasst das Bedienelement bevorzugt eine berührungssensitive Bedienfläche bzw. Bedienoberfläche z. B. in Form eines so genannten Touch-Screens. Auf der berührungssensitiven Bedienfläche des Bedienelements können Bewegungen in unterschiedlichen Freiheitsgraden ausgeführt werden.

In diesem Ausführungsbeispiel unterscheiden sich die beiden Bedienhandlungen dahin, dass die erste Bedienhandlung im Wesentlichen nur eine Berührung der Bedienfläche des Bedienelements und die zweite Bedienhandlung eine Bewegung auf der Bedienfläche ausgehend von der durch die erste Bedienhandlung definierten ersten Bedienposition auf der Bedienfläche ist. Die erste Bedienposition entspricht dem ersten Berührpunkt der Bedienfläche. Die zweite Bedienhandlung kann sonach eine oder mehrere translatorische Bewegungen, eine oder mehrere rotatorische Bewegungen oder Mischungen aus entsprechenden translatorischen und rotatorischen Bewegungen, z. B. bogenförmige Bewegungen, auf der Bedienfläche sein. Mithin bedingt eine Berührung der Bedienfläche des Bedienelements eine Aktivierung der Längs- und/oder Querführung. Selbstverständlich kann es sein, dass das Bedienelement hierfür zunächst bestimmt konfiguriert werden muss, d. h. z. B. ein bestimmtes Bedienprogramm für die Bedienung der Steuereinrichtung gestartet werden muss. Die erste Bedienhandlung kann sonach insbesondere durch ein Berühren der Bedienfläche mit einem Finger, einem Stift oder einem sonstigen Gegenstand erfolgen. Die Änderung bzw. Beeinflussung des Fahrparameters erfolgt z. B. durch eine bestimmte Bewegung auf der Bedienfläche ausgehend von dem Berührpunkt, an welchem die Bedienfläche zuvor berührt wurde. Die zweite Bedienhandlung kann sonach insbesondere durch ein Bewegen bzw. Ziehen oder "Wischen" z. B. des Fingers (schräg) nach oben, (schräg) nach unten, (schräg) nach links, (schräg) nach rechts auf bzw. entlang der Bedienfläche erfolgen.

Das letztgenannte Ausführungsbeispiel bezieht sich insbesondere auf ein portables Bedienelement, z. B. in Form eines Mobiltelefons, Smartphones, Tablets bzw. Tablet-Computers oder dergleichen. Grundsätzlich können die beschriebenen Bewegungen auf einer bedienelementseitigen Bedienfläche alternativ oder ergänzend auch durch Bewegungen eines Bedienabschnitts, wie z. B. eines beweglich gelagerten Knopfs oder einer beweglich gelagerten Taste, eines entsprechenden portablen Bedienelements realisiert sein.

Gemäß der Erfindung umfasst das Bedienelement ein eine Rückstellkraft gegen die zweite Bedienhandlung ausbildendes Rückstellmittel. Es ist also möglich, dass die erste Bedienhandlung von der zweiten Bedienhandlung (auch) dadurch unterschieden werden kann, dass die zweite Bedienhandlung entgegen einer entsprechenden Rückstellkraft auszuführen ist. Derart ist es möglich, die Durchführung der zweiten Bedienhandlung für den Bediener haptisch besser erkennbar zu gestalten. Die Rückstellkraft muss nicht statisch sein, sondern kann sich z. B. in Abhängigkeit der Art und Dauer der zweiten Bedienhandlung ändern, d. h. zu- oder abnehmen. Bezug nehmend auf das oben beschriebene Ausführungsbeispiel, in dem die zweite Bedienhandlung eine rotatorische Bewegung des Bedienelements ist, ist es beispielsweise möglich, dass sich die Rückstellkraft mit steigender winkelmäßig zurückgelegter Wegstrecke im Rahmen der rotatorischen Bewegung des Bedienelements erhöht. Das Prinzip ist selbstverständlich auf das beschriebene Ausführungsbeispiel der zweiten Bedienhandlung in Form einer gleichgerichteten, weiteren translatorischen Bewegung bzw. einer Schwenkbewegung übertragbar. Das Prinzip ist auch auf das beschriebene Ausführungsbeispiel der zweiten Bedienhandlung in Form einer Bewegung auf bzw. über eine berührungssensitive Bedienfläche übertragbar. Bei dem Rückstellmittel kann es sich z. B. um einen motorisch betreibbaren, mit dem Bedienelement gekoppelten Aktor handeln, welcher eine entsprechende gegen eine zweite Bedienhandlung gerichtete Rückstellkraft ausbilden kann. Denkbar ist beispielsweise auch die Realisierung des Bedienelements als Feder, welche derart mit dem Bedienelement gekoppelt ist, dass ihre Federkraft gegen die zweite Bedienhandlung gerichtet ist.

Es ist erfindungsgemäß vorgesehen, dass die Rückstellkraft in Abhängigkeit einer durch eine mit der Steuereinrichtung kommunizierende Fahrzeugumfeldsensorik, insbesondere während des Fahrmanövers, erfassten Fahrzeugumfeldinformation variierbar ist. Die Rückstellkraft kann sonach in Abhängigkeit einer entsprechenden Fahrzeugumfeldinformation, d. h. deren Aussagegehalts, veränderbar sein. Der Vorteil dieses Ausführungsbeispiels liegt darin, dass bei Fahrmanövern in komplexen oder allgemein schwierigen Fahr- oder Verkehrssituationen, welche durch die Fahrzeugumfeldinformation abgebildet werden können, die Änderung bzw. Beeinflussung des Fahrparameters über die zweite Bedienhandlung z. B. mit einer erhöhten Kollisionsmöglichkeit einhergehen kann. Die im Rahmen der zweiten Bedienhandlung bedienerseitig durchzuführenden Bewegungen können demnach durch die Ausbildung einer Rückstellkraft erschwert werden, so dass der Bediener diese gegebenenfalls nicht oder nur reduziert durchführt. In Ausnahmefällen ist es ebenso denkbar, dass in Abhängigkeit der Fahrzeugumfeldinformation eine vorzunehmende Änderung oder Beeinflussung des Fahrparameters über die zweite Bedienhandlung ausgesetzt wird, da diese mit einer zu hohen Kollisionsmöglichkeit verbunden ist. Bei der mit der Steuereinrichtung kommunizierenden Fahrzeugumfeldsensorik handelt es sich um eine kraftfahrzeugseitige Einrichtung, über welche z. B. eine Abschätzung bzw. Erkennung von Gefahrensituationen, insbesondere Kollisionsmöglichkeiten mit im Fahrzeugumfeld befindlichen Objekten, d. h. z. B. Verkehrsteilnehmern oder sonstigen Hindernissen, möglich ist.

Zweckmäßig kann die Steuereinrichtung im Rahmen einer Änderung des Fahrparameters zur Berücksichtigung eines Grenzwertes für den Fahrparameter ausgebildet sein, welcher Grenzwert durch die zweite Bedienhandlung nicht überschritten werden kann. Auch durch diese besondere Weiterbildung der Erfindung ist eine sicherere Bedienung der Längs- und/oder Querführung, d. h. insbesondere eine sicherere Vornahme von Änderungen bzw. Beeinflussungen des Fahrparameters über die zweite Bedienhandlung möglich. In die tatsächliche Änderung des Fahrparameters können sonach mehrere Größen, d. h. neben der über die zweite Bedienhandlung vorgenommenen Änderung bzw. Beeinflussung zusätzliche Größen bzw. Randbedingungen eingehen. Insbesondere kann die Möglichkeit der über die zweite Bedienhandlung durchgeführten Änderung bzw. Beeinflussung des Fahrparameters derart begrenzt sein, dass diese nur innerhalb eines bestimmten, fahrparameterspezifischen Grenzbereichs möglich ist, um einen bestimmten fahrparameterspezifischen Grenzwert nicht zu über- oder unterschreiten.

Die Verwendung eines entsprechenden Grenzwerts kann insbesondere dann zweckmäßig sein, wenn der Fahrparameter die im Rahmen der Längs- und/oder Querführung eingestellte Fahrgeschwindigkeit des Kraftfahrzeugs ist. In diesem Fall ist der Grenzwert typischerweise eine Grenzfahrgeschwindigkeit.

Die Grenzfahrgeschwindigkeit kann vorgegeben sein und/oder in Abhängigkeit einer durch eine oder die mit der Steuereinrichtung kommunizierende Fahrzeugumfeldsensorik, insbesondere während des Fahrmanövers, erfassten Fahrzeugumfeldinformation anpassbar sein. Die Vorgabe der Grenzgeschwindigkeit kann beispielsweise an verkehrsrechtlichen Vorschriften orientiert sein, so dass zulässige Höchstgeschwindigkeiten als entsprechende Grenzfahrgeschwindigkeiten herangezogen werden können. Die Grenzfahrgeschwindigkeit kann dabei auf die für den aktuellen befahrenen Streckenabschnitt geltende zulässige Höchstgeschwindigkeit bezogen sein. Hierzu kann seitens der Steuereinrichtung beispielsweise auf in einem Speicher hinterlegte Streckendaten zurückgegriffen werden. Die Grenzfahrgeschwindigkeit kann jedoch auch in Abhängigkeit der aktuellen Verkehrssituation, welche wiederum durch eine entsprechende Fahrzeugumfeldinformation abgebildet ist, angepasst sein, so dass die Grenzfahrgeschwindigkeit bei komplexen Verkehrssituationen auf niedrigere Werte und bei weniger komplexen Verkehrssituationen auf höhere Werte festgelegt wird.

Eine weitere vorteilhafte Ausführungsform der Erfindung sieht vor, dass die Steuereinrichtung derart konfiguriert ist, dass bei Durchführen der ersten Bedienhandlung stets ein vorgegebener Wert des Fahrbetriebsparameters voreingestellt ist. Der bei Aktivierung der Längs- und/oder Querführung über die erste Bedienhandlung vorgegebene Wert ist typischerweise ein bestimmter Ausgangswert, welcher sowohl eine Änderung bzw. Beeinflussung des Fahrparameters nach oben als auch nach unten zulässt. Anknüpfend an das Beispiel der Fahrgeschwindigkeit als entsprechender Fahrparameter kann der vorgegebene Wert z. B. im Rahmen eines zumindest teilautomatisierten Parkvorgangs beispielsweise 5 km/h betragen. Der Bediener, d. h. insbesondere der Fahrer, hat also über die Vornahme einer entsprechenden zweiten Bedienhandlung die Möglichkeit, die im Rahmen der Längs- und/oder Querführung für den Parkvorgang von der Steuereinrichtung realisierte Fahrgeschwindigkeit zu erhöhen oder zu erniedrigen. Selbstverständlich kann der voreingestellte Wert bedienerseitig änderbar sein, d. h. der Bediener kann selbst entscheiden, bei welchem Wert der voreingestellte Wert im Rahmen eines bestimmten zumindest teilautomatisierten Fahrmanövers bei Aktivierung der Längs- und/oder Querführung liegt.

Das Bedienelement umfasst ferner erfindungsgemäß ein Ausgabemittel zur Ausgabe akustischer und/oder haptischer und/oder optischer Signale. Alternativ ist das Bedienelement zur Steuerung wenigstens eines kraftfahrzeugseitigen Ausgabemittels zur Ausgabe akustischer und/oder haptischer und/oder optischer Signale ausgebildet, wobei die Signale in Abhängigkeit einer durch eine oder die mit der Steuereinrichtung kommunizierende Fahrzeugumfeldsensorik erfassten Fahrzeugumfeldinformation ausgebbar sind. Über das Bedienelement respektive dessen Zusammenwirken mit entsprechenden kraftfahrzeugseitigen Ausgabemitteln sind sonach bestimmte Signale im Zusammenhang mit der Durchführung der Längs- und/oder Querführung ausgebbar.

Die Ausgabe entsprechender Signale ist insbesondere dann zweckmäßig, wenn die Signale dazu verwendet werden, den Bediener, d. h. insbesondere den Fahrer, auf bestimmte Verkehrssituationen, d. h. z. B. bestimmte im Fahrzeugumfeld befindliche Objekte, hinzuweisen. Vorteilhaft können die Signale sonach in Abhängigkeit einer durch eine oder die mit der Steuereinrichtung kommunizierende Fahrzeugumfeldsensorik erfassten Fahrzeugumfeldinformation ausgebbar sein. Die Fahrzeugumfeldinformation bildet das aktuelle Fahrzeugumfeld ab und beinhaltet sonach auch bestimmte Objekte, die gegebenenfalls eine Gefährdung für das Kraftfahrzeug darstellen können. Solche Objekte können beispielsweise andere Verkehrsteilnehmer oder sonstige, insbesondere bauliche, Hindernisse sein. Der Bediener, d. h. insbesondere der Fahrer, kann über die Gabe entsprechender Signale in Abhängigkeit der Fahrzeugumfeldinformation sonach z. B. vor einer möglichen Kollision des Kraftfahrzeugs mit einem solchen Objekt gewarnt werden. Hierbei kann die Steuereinrichtung im Rahmen der Verarbeitung der Fahrzeugumfeldinformation auf bestimmte Kollisionsschwellwerte zurückgreifen, mit welchen die Fahrzeugumfeldinformation verglichen werden kann. Anhand des Vergleichsergebnisses, welches sonach eine Bewertung der Fahrzeugumfeldinformation darstellt, kann entschieden werden, ob, über welches Ausgabemittel und mit welcher Intensität ein oder mehrere entsprechende Signale ausgegeben werden. Es ist demnach insbesondere auch die Intensität der Signale in Abhängigkeit der Fahrzeugumfeldinformation variierbar.

Konkret kann die über eine entsprechende zweite Bedienhandlung durchgeführte Änderung bzw. Beeinflussung eines Fahrparameters, z. B. der Fahrgeschwindigkeit, beispielsweise von einer haptischen Signalgabe begeleitet sein, wenn der Bediener, d. h. insbesondere der Fahrer, versucht, die Fahrgeschwindigkeit in einer entsprechend auf Grundlage der Fahrzeugumfeldinformation als kritisch bewerteten Verkehrssituation zu erhöhen. Die haptische Signalgabe umfasst insbesondere Vibrationen bzw. Vibrationsimpulse des Bedienelements. Die haptische Signalgabe kann jedoch auch die Ausbildung entsprechender Rückstellkräfte gegen die zweite Bedienhandlung umfassen, welche beispielsweise über das oben beschriebene bedienelementseitige Rückstellmittel umgesetzt werden können. Die oder ein Versuch einer weiteren Erhöhung der Fahrgeschwindigkeit durch eine bedienerseitige zweite Bedienhandlung kann sonach durch den Aufbau einer entsprechenden Rückstellkraft erschwert werden.

Denkbar ist es alternativ oder ergänzend auch, dass die Änderung bzw. Beeinflussung z. B. der Fahrgeschwindigkeit beispielsweise von einer optischen Signalgabe begleitet ist. Es ist also möglich, dass die oder ein Versuch einer Änderung bzw. Beeinflussung eines Fahrparameters, d. h. z. B. der Fahrgeschwindigkeit, mit einer Ausgabe und im Weiteren gegebenenfalls einer Änderung der von einer bedienelementseitigen und/oder kraftfahrzeugseitigen Beleuchtungseinrichtung ausgehenden Lichtintensität, Lichtfärbung etc. einhergeht.

Wie erwähnt ist alternativ oder ergänzend auch eine akustische Signalgabe möglich. Es ist also möglich, dass die oder ein Versuch einer Änderung bzw. Beeinflussung eines Fahrparameters, d. h. z. B. der Fahrgeschwindigkeit, mit einer Ausgabe und im Weiteren gegebenenfalls einer Änderung der von einer bedienelementseitigen und/oder kraftfahrzeugseitigen Lautsprechereinrichtung ausgehenden Tons, Tonfolge, Rhythmus etc. einhergeht.

Die genannten Ausgabemöglichkeiten entsprechender Signale sind sowohl für die kraftfahrzeugseitig verbaute Ausführung des Bedienelements als auch für die portable Ausführung des Bedienelements gültig.

Die Erfindung betrifft ferner ein Verfahren zum Betrieb eines Kraftfahrzeugs, umfassend eine Steuereinrichtung, die eine zumindest teilautomatisierte Längs- und/oder Querführung des Kraftfahrzeugs im Rahmen eines bestimmten Fahrmanövers steuert, und wenigstens ein Bedienelement, das mit der Steuereinrichtung kommuniziert und die zumindest teilautomatisierte Längs- und/oder Querführung betreffende Steuerinformationen an die Steuereinrichtung gibt, wobei über eine erste bedienerseitige Bedienhandlung am oder mit dem Bedienelement eine Aktivierung oder eine Deaktivierung der Längs- und/oder Querführung gesteuert wird und über eine, insbesondere von der ersten Bedienhandlung unterschiedliche, zusätzliche zweite bedienerseitige Bedienhandlung am oder mit dem Bedienelement wenigstens ein den durch die Steuereinrichtung gesteuerten Fahrbetrieb des Kraftfahrzeugs beeinflussender Fahrparameter geändert wird. Das Verfahren zeichnet sich dadurch aus, dass das Bedienelement ein eine Rückstellkraft gegen die zweite Bedienhandlung ausbildendes Rückstellmittel umfasst, wobei die Rückstellkraft in Abhängigkeit einer durch eine mit der Steuereinrichtung kommunizierende Fahrzeugumfeldsensorik, insbesondere während des Fahrmanövers, erfassten Fahrzeugumfeldinformation variierbar ist und/oder dass das Bedienelement ein Ausgabemittel zur Ausgabe akustischer und/oder haptischer und/oder optischer Signale umfasst oder das Bedienelement zur Steuerung wenigstens eines kraftfahrzeugseitigen Ausgabemittels zur Ausgabe akustischer und/oder haptischer und/oder optischer Signale ausgebildet ist, wobei die Signale in Abhängigkeit einer durch eine oder die mit der Steuereinrichtung kommunizierende Fahrzeugumfeldsensorik erfassten Fahrzeugumfeldinformation ausgebbar sind, wobei die Intensität der Signale in Abhängigkeit der Fahrzeugumfeldinformation variierbar ist.

Bezüglich des erfindungsgemäßen Verfahrens gelten sämtliche Ausführungen bezüglich des erfindungsgemäßen Kraftfahrzeugs sowie dessen oben beschriebener möglicher Ausführungsformen bzw. Ausführungsbeispiele analog. Das erfindungsgemäße Verfahren lässt sich demnach in analoger Weise durch die oben beschriebenen möglichen Ausführungsformen bzw. Ausführungsbeispiele des erfindungsgemäßen Kraftfahrzeugs weiterbilden.

Weitere Vorteile, Merkmale und Einzelheiten der Erfindung ergeben sich aus den im Folgenden beschriebenen Ausführungsbeispielen sowie anhand der Zeichnungen. Dabei zeigt:
- Fig. 1: eine Prinzipdarstellung eines Kraftfahrzeugs gemäß einem Ausführungsbeispiel der Erfindung;
- Fig. 2, 3, 4: je eine Prinzipdarstellung eines Bedienelements gemäß einem Ausführungsbeispiel der Erfindung;
- Fig. 5: eine Prinzipdarstellung eines automatisierten Parkvorgangs eines Kraftfahrzeugs gemäß einem Ausführungsbeispiel der Erfindung;
- Fig. 6, 7: je ein Diagramm zur Darstellung des Verlaufs einer zweiten Bedienhandlung in Abhängigkeit der Zeit; und
- Fig. 8, 9: je ein Diagramm zur Darstellung des Verlaufs der mit der zweiten Bedienhandlung in Fig. 6 oder 7 korrelierten Fahrgeschwindigkeit in Abhängigkeit der Zeit.

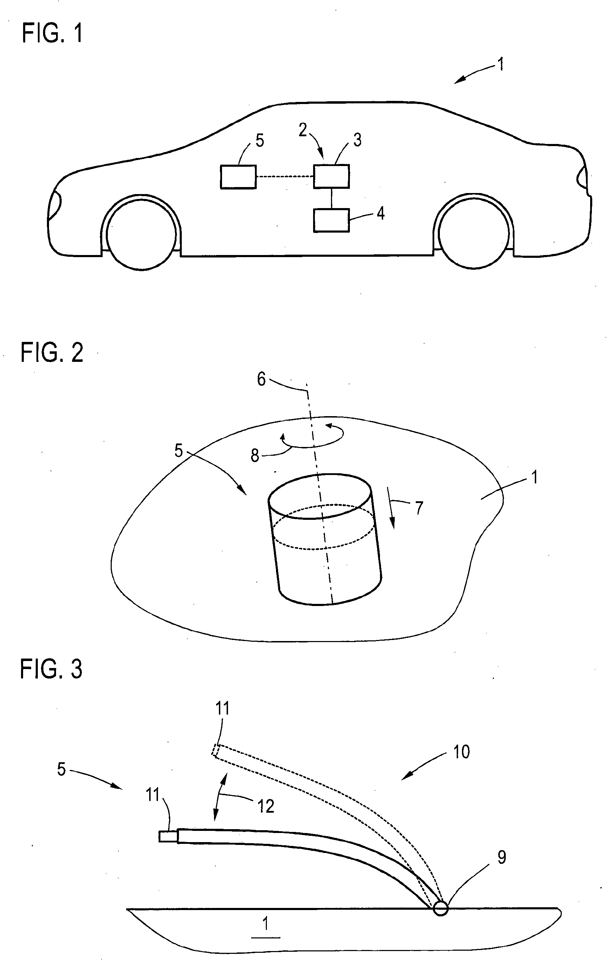

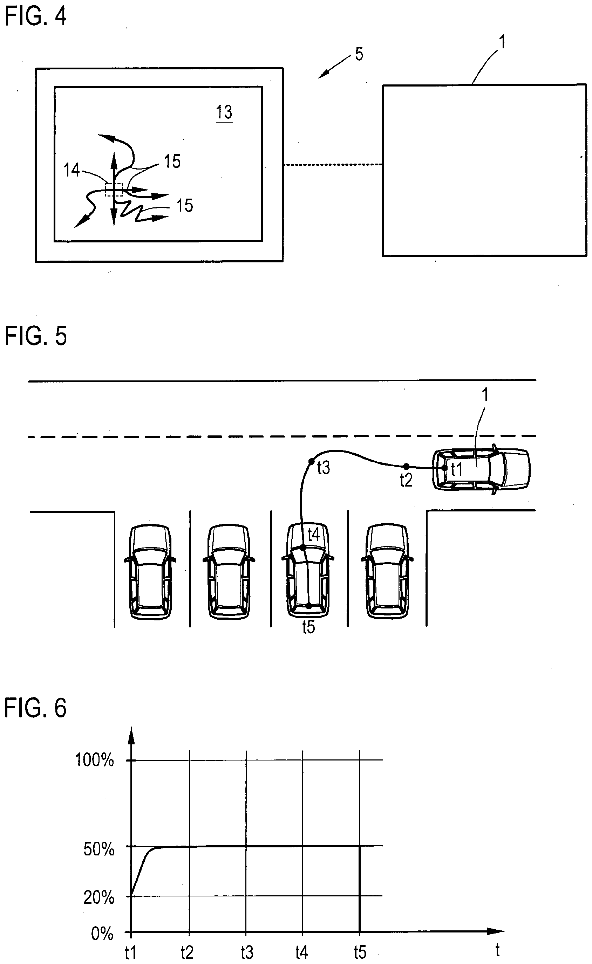

Fig. 1 zeigt ein Kraftfahrzeug 1 gemäß einem Ausführungsbeispiel der Erfindung. Das Kraftfahrzeug 1 umfasst ein Fahrerassistenzsystem 2 zur Durchführung einer zumindest teilautomatisierten Längs- und/oder Querführung im Rahmen eines bestimmten Fahrmanövers, wie z. B. eines automatisierten Parkvorgangs (vgl. Fig. 5).

Das Fahrerassistenzsystem 2 umfasst eine Steuereinrichtung 3. Die Steuereinrichtung 3 kommuniziert mit allen für die zumindest teilautomatisierte Längs- und/oder Querführung relevanten kraftfahrzeugseitigen Aktoren, d. h. insbesondere dem oder den Antriebsaggregaten (nicht gezeigt), den Bremsvorrichtungen (nicht gezeigt), der Lenkvorrichtung (nicht gezeigt) etc. Die Kommunikation der Steuereinrichtung 3 mit den Aktoren erfolgt über ein kraftfahrzeugseitig vorhandenes Datennetzwerk z. B. in Form eines Bus-Netzwerks.

Die Steuereinrichtung 3 kommuniziert ferner mit einer Fahrzeugumfeldsensorik 4. Die Fahrzeugumfeldsensorik 4 umfasst mehrere kraftfahrzeugseitig verbaute Sensoren, z. B. in Form von Kameras, über welche das Fahrzeugumfeld sensiert wird. Die von den Sensoren gelieferten Sensorsignale werden von der Fahrzeugumfeldsensorik 4 rechnerisch in eine Fahrzeugumfeldinformation umgesetzt, welche Fahrzeugumfeldinformation an die Steuereinrichtung 3 übermittelt wird.

Die Durchführung der Längs- und/oder Querführung basiert auf Steuerinformationen (Steuerbefehlen), die das Fahrerassistenzsystem 2 respektive die Steuereinrichtung 3 von einem Bediener, d. h. insbesondere dem Fahrer, erhält. Hierzu kommuniziert die Steuereinrichtung 3 mit einem Bedienelement 5, welches zur Kommunikation mit der Steuereinrichtung 3 und zur Gabe entsprechender die zumindest teilautomatisierte Längs- und/oder Querführung betreffender Steuerinformationen an die Steuereinrichtung 3 ausgebildet ist.

Die mittels des Bedienelements 5 an die Steuereinrichtung 3 gegebenen Steuerinformationen teilen sich grundsätzlich in zwei Arten auf. Über eine erste Art von Steuerinformationen lässt sich die Längs- und/oder Querführung aktivieren bzw. deaktivieren, über eine zweite Art von Steuerinformationen lässt sich wenigstens ein die durch die Steuereinrichtung 3 gesteuerte Längs- und/oder Querführung des Kraftfahrzeugs 1 beeinflussender Fahrparameter ändern bzw. beeinflussen. Bei dem Fahrparameter handelt es sich beispielsweise um die Fahrgeschwindigkeit oder ein Geschwindigkeitsprofil des Kraftfahrzeugs 1 im Rahmen der zumindest teilautomatisierten Längs- und/oder Querführung.

Die Erzeugung der Steuerinformationen und die daraus resultierende Steuerung der Längs- und/oder Querführung des Kraftfahrzeugs 1 basiert auf bestimmten bedienerseitigen Bedienhandlungen am oder mit dem Bedienelement 5. Über eine bedienerseitige erste Bedienhandlung am oder mit dem Bedienelement 5 ist die Längs- und/oder Querführung aktivierbar. Entsprechend ist die Längs- und/oder Querführung durch eine Aufhebung der ersten Bedienhandlung deaktivierbar. Über eine, insbesondere von der ersten Bedienhandlung unterschiedliche, zusätzliche bedienerseitige zweite Bedienhandlung am oder mit dem Bedienelement 5 ist der Fahrparameter, d. h. z. B. die Fahrgeschwindigkeit des Kraftfahrzeugs 1 im Rahmen der zumindest teilautomatisierten Längs- und/oder Querführung änderbar bzw. beeinflussbar.

Die über die zweite Bedienhandlung mögliche Änderung bzw. Beeinflussung des Fahrparameters kann unter Berücksichtigung eines Grenzwerts für den zu ändernden bzw. beeinflussenden Fahrparameter erfolgen. Dieser Grenzwert kann durch die zweite Bedienhandlung nicht überschritten werden. Die Steuereinrichtung 3 ist sonach im Rahmen einer Änderung bzw. Beeinflussung des Fahrparameters zur Berücksichtigung eines Grenzwertes für den Fahrparameter ausgebildet, welcher Grenzwert durch die zweite Bedienhandlung nicht überschritten werden kann.

Dies lässt sich an dem Beispiel des über eine zweite Bedienhandlung änderbaren bzw. beeinflussbaren Fahrparameters in Form der Fahrgeschwindigkeit veranschaulichen. In der Steuereinrichtung 3 ist eine entsprechende Grenzfahrgeschwindigkeit hinterlegt, die im Rahmen der Längs- und/oder Querführung bei einem bestimmten, zumindest teilautomatisiert durchzuführenden Fahrmanöver über die zweite Bedienhandlung nicht überschritten werden kann. Die Grenzfahrgeschwindigkeit kann z. B. bei einem automatisiert durchgeführten Parkvorgang beispielsweise bei 10 km/h liegen. Die Einstellung der Grenzfahrgeschwindigkeit kann an verkehrsrechtlich vorgegebenen zulässigen Höchstgeschwindigkeiten orientiert sein. Denkbar ist es auch, dass die Grenzfahrgeschwindigkeit in Abhängigkeit der durch die Fahrzeugumfeldsensorik 4 ermittelten Fahrzeugumfeldinformation eingestellt oder angepasst wird. Mithin kann die Grenzfahrgeschwindigkeit beispielsweise durch im Fahrzeugumfeld befindliche Objekte, z. B. in Form von anderen Verkehrsteilnehmern oder baulichen Hindernissen, eingestellt oder angepasst werden.

Das dem Kraftfahrzeug 1 zugehörige Fahrerassistenzsystem 2 respektive dessen Steuereinrichtung 3 zeichnet sich also insbesondere dadurch aus, dass die Steuerung der Längs- und/oder Querführung bedienerseitig über eine entsprechende erste Bedienhandlung nicht nur aktiviert bzw. deaktiviert werden kann, der Bediener hat über eine zusätzlich zu der ersten Bedienhandlung durchgeführte zweite Bedienhandlung auch die Möglichkeit, bestimmte Fahrparameter im Rahmen der Längs- und/oder Querführung bedarfsweise zu ändern bzw. zu beeinflussen. Der Bediener kann durch eine entsprechende zweite Bedienhandlung also beispielsweise die im Rahmen eines bestimmten, von der Steuereinrichtung 3 gesteuerten Fahrmanövers voreingestellte Fahrgeschwindigkeit ändern, d. h. erniedrigen oder erhöhen.

Die Fig. 2 - 4 zeigen Prinzipdarstellungen von Bedienelementen 5 gemäß unterschiedlichen Ausführungsbeispielen der Erfindung. Grundsätzlich kann ein entsprechendes Bedienelement 5 kraftfahrzeugseitig verbaut, d. h. fest mit dem Kraftfahrzeug 1 verbunden, oder portabel, d. h. nicht fest mit dem Kraftfahrzeug 1 verbunden, sein. Ist das Bedienelement 5 portabel bzw. tragbar, weist dieses eine Sende- und/oder Empfangseinrichtung (nicht gezeigt) auf, über welche es mit einer kraftfahrzeugseitigen, insbesondere steuereinrichtungsseitigen, Sende- und/oder Empfangseinrichtung (nicht gezeigt) kommunizieren kann, um entsprechende, sich aus entsprechenden Bedienhandlungen ergebende Steuerinformationen an die Steuereinrichtung 3 zu übermitteln.

Fig. 2 zeigt eine Prinzipdarstellung eines als Dreh-Drück-Stellelement ausgebildeten Bedienelements 5. Das Bedienelement 5 ist kraftfahrzeugseitig, z. B. im Bereich der Mittelkonsole, verbaut. Das Bedienelement 5 ist hier in zwei unterschiedlichen Bewegungsfreiheitsgraden bewegbar. Ein erster Bewegungsfreiheitsgrad (Drücken) ist durch die Möglichkeit einer translatorischen Bewegung des Bedienelements 5 entlang einer Translationsachse 6 gegeben (vgl. Pfeil 7). Ein zweiter Bewegungsfreiheitsgrad (Drehen) ist durch die Möglichkeit einer rotatorischen Bewegung des Bedienelements 5 um die Translationsachse 6 gegeben (vgl. Doppelpfeil 8).

Die erste Bedienhandlung ist durch eine translatorische Bewegung des Bedienelements 5 ausgehend von einer Ausgangsposition in eine erste Bedienposition definiert. Die Längs- und/oder Querführung wird demnach durch Drücken des Bedienelements 5 ausgehend von einer Ausgangsposition, die typischerweise der Ruheposition des Bedienelements 5 entspricht, in die erste Bedienposition aktiviert. Befindet sich das Bedienelement 5 in der ersten Bedienposition (vgl. gestrichelte Darstellung) kann durch eine Drehung des Bedienelements 5 um die Translationsachse 6 der Fahrparameter, d. h. z. B. die Fahrgeschwindigkeit, verändert werden. Eine Drehung des Bedienelements 5 im Uhrzeigersinn kann beispielsweise eine Erhöhung des Fahrparameters, d. h. z. B. der Fahrgeschwindigkeit, eine Drehung des Bedienelements 5 gegen den Uhrzeigersinn kann beispielsweise eine Reduzierung des Fahrparameters, d. h. z. B. der Fahrgeschwindigkeit, bedingen.

Die Drehung des Bedienelements 5 um die Translationsachse 6 kann dabei gegen eine von einem Rückstellmittel (nicht gezeigt) ausgeübte Rückstellkraft erfolgen. Die über die zweite Bedienhandlung vorgenommene Änderung des Fahrparameters ist derart für den Bediener haptisch besser wahrnehmbar. Das Rückstellmittel kann als mit dem Bedienelement 5 gekoppelter Elektromotor ausgebildet sein, über welchen bei Drehung des Bedienelements 5 eine entsprechende Rückstellkraft auf das Bedienelement 5 ausgeübt wird.

Die über das Rückstellmittel ausgeübte Rückstellkraft kann in Abhängigkeit, z. B. der Fahrzeugumfeldinformation, variierbar sein. Es ist also möglich, dass in Abhängigkeit des Aussagegehalts der Fahrzeugumfeldinformation eine im Vergleich höhere Rückstellkraft erzeugt und auf das Bedienelement 5 bei tatsächlicher oder versuchter Durchführung der zweiten Bedienhandlung ausgeübt wird. Dies kann insbesondere erfolgen, wenn die Fahrzeugumfeldinformation, gegebenenfalls nach einem Abgleich mit entsprechenden Kollisionsschwellwerten, eine erhöhte Kollisionswahrscheinlichkeit bei der tatsächlichen oder versuchten Erhöhung z. B. der Fahrgeschwindigkeit angibt, so dass hier die Ausübung einer erhöhten, die Drehbewegung des Bedienelements 5 erschwerenden Rückstellkraft einen Sicherheitsgewinn darstellen kann.

Anhand von dem in Fig. 2 gezeigten Ausführungsbeispiel eines Bedienelements in Form eines Dreh-Drück-Stellelements soll eine alternative Möglichkeit der Umsetzung einer zweiten Bedienhandlung erläutert werden. Anstelle einer rotatorischen Bewegung um die Translationsachse 6 kann die zweite Bedienhandlung auch durch eine gleichgerichtete, weitere translatorische Bewegung des Bedienelements 5 ausgehend von der ersten Bedienposition gegeben sein. Das Bedienelement 5 wird im Rahmen der zweiten Bedienhandlung sonach gleichgerichtet weiter translatorisch bewegt (weiteres Drücken). Die zweite Bedienhandlung kann sich hier von der ersten Bedienhandlung darin unterscheiden, dass die translatorische Bewegung des Bedienelements 5 im Rahmen der zweiten Bedienhandlung, d. h. ausgehend von der ersten Bedienposition, gegen eine entsprechende Rückstellkraft erfolgt. Die zweite Bedienposition kann gegebenenfalls dadurch definiert sein, dass das Bedienelement 5 ausgehend von der ersten Bedienposition in eine zweite Bedienposition bewegt werden muss, so dass erst bei Erreichen der zweiten Bedienposition eine entsprechende Änderung bzw. Beeinflussung des Fahrparameters, d. h. insbesondere der Fahrgeschwindigkeit, erfolgt.

Bei dem in Fig. 3 gezeigten Ausführungsbeispiel handelt es sich bei dem Bedienelement 5 um ein um einen Lagerpunkt 9 bzw. eine Lagerstelle schwenkbar gelagertes Hebelelement 10. Die Lagerstelle 9 kann beispielsweise im Bereich der Mittelkonsole oder des Lenkrads befindlich sein. Das Hebelelement 10 ist im Bereich seines freien Endes mit einem Bedienabschnitt 11 in Form eines translatorisch bewegbaren Knopfes versehen. Der Bedienabschnitt 11 ist sonach von einer Ausgangsposition bzw. Ruheposition, in der er um eine erste Wegstrecke aus dem freien Ende des Hebelelements 10 herausragt, translatorisch in eine erste Bedienposition, in der er z. B. im Vergleich zu der ersten Wegstrecke um eine kleinere Wegstrecke aus dem freien Ende des Hebelelements 10 herausragt, bewegbar. Die beschriebene Bewegung des Bedienabschnitts 11 erfolgt typischerweise durch Ausübung eines bestimmten Drucks auf den Bedienabschnitt 11, d. h. der Bedienabschnitt 11 wird in das Hebelelement 10 gedrückt.

Die erste Bedienhandlung ist durch eine translatorische Bewegung des Bedienabschnitts 11 (Drücken) ausgehend von der Ausgangsposition in die erste Bedienposition definiert. Die Längs- und/oder Querführung wird demnach durch Drücken des Bedienabschnitts 11 ausgehend von einer Ausgangsposition, die typischerweise der Ruheposition des Bedienabschnitts 11 entspricht, in die erste Bedienposition aktiviert. Durch ein Verschwenken des Hebelelements 10 mit gedrücktem Bedienabschnitt 11 um die Lagerstelle 9 (vgl. Doppelpfeil 12) ist die zweite Bedienhandlung definiert, so dass derart der Fahrparameter geändert bzw. beeinflusst werden kann. Eine Verschwenkung des Hebelelements 10 nach oben (vgl. gestrichelte Darstellung) kann beispielsweise eine Erhöhung des Fahrparameters, d. h. z. B. der Fahrgeschwindigkeit, eine Verschenkung des Hebelelements 10 nach unten kann beispielsweise eine Reduzierung des Fahrparameters, d. h. z. B. der Fahrgeschwindigkeit, bedingen.

Bei dem in Fig. 4 gezeigten Ausführungsbeispiel handelt es sich bei dem Bedienelement 5 um ein Smartphone oder einen Tablet-Computer, kurz Tablet. Das Bedienelement 5 ist sonach kein Teil des Kraftfahrzeugs 1, sondern lediglich mit dem Kraftfahrzeug 1, d. h. insbesondere der Steuereinrichtung 3, über eine geeignete Kommunikationsverbindung, z. B. eine drahtlose Netzwerkverbindung, verbunden. Das Smartphone bzw. der Tablet-Computer ist mit einer berührungssensitiven Bedienfläche 13 (Touch-Screen) ausgestattet, auf welcher bzw. über welche entsprechende Bedienhandlungen ausgeführt werden können.

Die erste Bedienhandlung ist, gegebenenfalls nach Aktivierung eines bestimmten bedienelementseitig installierten Programms, durch Berühren der Bedienfläche 13 mit einem Finger, einem Stift oder dergleichen definiert. Es kann dabei erforderlich sein, dass ein bestimmter Bereich auf der Bedienfläche 13 zu berühren ist (vgl. Bereich 14). Die Aktivierung der Längs- und/oder Querführung erfolgt sonach durch Berühren der Bedienfläche 13 respektive des Bereichs 14 der Bedienfläche 13. Die zweite Bedienhandlung ist durch eine Bewegung ("Wischen") des Fingers, Stifts oder dergleichen, z. B. ausgehend von dem Bereich 14, entlang der bzw. über die Bedienfläche 13 definiert (vgl. Pfeile 15), so dass derart der Fahrparameter geändert bzw. beeinflusst werden kann. Wie durch die unterschiedlichen Pfeile 15 angedeutet ist, kann die Bewegung grundsätzlich in jedwede Richtung und in jedweder Form erfolgen. Beispielsweise kann ein Bewegen bzw. ein Ziehen des Fingers nach oben oder rechts eine Erhöhung des Fahrparameters, d. h. z. B. der Fahrgeschwindigkeit, und eine Bewegung des Fingers nach unten oder links eine Reduzierung des Fahrparameters, d. h. z. B. der Fahrgeschwindigkeit, bedingen.

Wie erwähnt werden die durch die auf der Bedienfläche 13 durchgeführten Bedienhandlungen erzeugten Steuerinformationen für die Längs- und/oder Querführung an die Steuereinrichtung 3 übermittelt. Denkbar ist es jedoch auch, nur entsprechende, die auf der Bedienfläche 13 durchgeführten Bedienhandlungen bzw. Bewegungen beschreibende Informationen an die Steuereinrichtung 3 zu übermitteln und diese in der Steuereinrichtung 3 in entsprechende Steuerinformationen für die Längs- und/oder Querführung zu verarbeiten.

Fig. 5 zeigt eine Prinzipdarstellung eines automatisierten Parkvorgangs eines Kraftfahrzeugs 1 gemäß einem Ausführungsbeispiel der Erfindung. Der mittels der die Längs- und/oder Querführung steuernden Steuereinrichtung 3 gesteuerte Parkvorgang ist in fünf aufeinander folgende Zeitpunkte t1 - t5 unterteilt. Der Zeitpunkt t1 entspricht dem Ausgangszustand des Kraftfahrzeugs 1 vor dem automatisiert erfolgenden Parkvorgang. Zu dem Zeitpunkt t5 ist der Parkvorgang abgeschlossen, das Kraftfahrzeug 1 befindet sich in der Parklücke, d. h. in einem ordnungsgemäß zwischen anderen Kraftfahrzeugen geparkten Zustand.

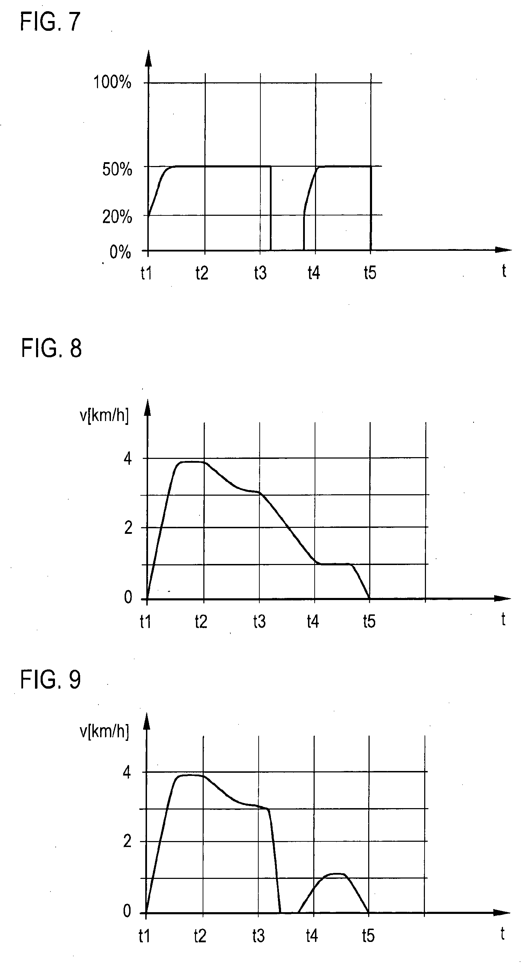

Die Fig. 6, 7 zeigen je ein Diagramm zur Darstellung des Verlaufs einer zweiten Bedienhandlung (y-Achse) in Abhängigkeit der Zeit (x-Achse). Die die zweite Bedienhandlung repräsentierende y-Achse ist mit einer Skalierung versehen, die eine bestimmte prozentuale Änderung des mit der zweiten Bedienhandlung änderbaren bzw. beeinflussbaren Fahrparameters angibt. Die Fig. 8, 9 zeigen je ein Diagramm zur Darstellung des Verlaufs der mit der zweiten Bedienhandlung in Fig. 6 oder 7 korrelierten Fahrgeschwindigkeit des Kraftfahrzeugs 1 (y-Achse) in Abhängigkeit der Zeit (x-Achse).

Die in Fig. 5 gezeigten Zeitpunkte t1 - t5 sind in den in den Fig. 6 - 9 gezeigten Diagrammen jeweils eingetragen, so dass sich ein Zusammenhang zwischen den Positionen des Kraftfahrzeugs 1 während des automatisierten Parkvorgangs (vgl. Fig. 5), der zweiten Bedienhandlung (vgl. Fig. 6, 7) und der Fahrgeschwindigkeit des Kraftfahrzeugs 1 im Rahmen des automatisierten Parkvorgangs (vgl. Fig. 8, 9) erkennen lässt.

Der in Fig. 8 gezeigte zeitliche Verlauf der Fahrgeschwindigkeit des Kraftfahrzeugs 1 ist mit dem in Fig. 6 gezeigten zeitlichen Verlauf der zweiten Bedienhandlung verknüpft. Der in Fig. 9 gezeigte zeitliche Verlauf der Fahrgeschwindigkeit des Kraftfahrzeugs 1 ist mit dem in Fig. 7 gezeigten zeitlichen Verlauf der zweiten Bedienhandlung verknüpft. Es werden sonach in den Fig. 6, 8 und Fig. 7, 9 zwei unterschiedliche verlaufende Parkvorgänge gezeigt.

Zunächst soll der in den Fig. 6, 8 dargestellte Parkvorgang erläutert werden. Der Bediener aktiviert zum Zeitpunkt t1 über eine entsprechende erste Bedienhandlung und die damit verbundenen Steuerinformationen die über die Steuereinrichtung 3 gesteuerte Längs- und/oder Querführung des Kraftfahrzeugs 1. Die erste Bedienhandlung kann beispielsweise ein Drücken des in Fig. 2 gezeigten Bedienelements 5, d. h. eines Dreh-Drück-Stellelements, sein. Ersichtlich wird durch Aktivieren der Längs- und/oder Querführung ein voreingestellter Wert für den mittels der zweiten Bedienhandlung änderbaren bzw. beeinflussbaren Fahrparameter angenommen. Der in Fig. 6 dargestellte Wert zum Zeitpunkt t1 liegt bei 20%. Der Bediener hat also im Weiteren grundsätzlich die Möglichkeit, den über die zweite Bedienhandlung änderbaren bzw. beeinflussbaren Wert zu erhöhen oder zu erniedrigen. Der automatisiert vorzunehmende Parkvorgang verläuft so insgesamt mit einem im Vergleich zu dem über den voreingestellten Wert von 20% definierten Geschwindigkeitsprofil anderen Geschwindigkeitsprofil, welchem höhere oder niedrigere Fahrgeschwindigkeiten zugrunde liegen.

Wie aus Fig. 8 ersichtlich ist, beschleunigt das Kraftfahrzeug 1 zwischen den Zeitpunkten t1 und t2 zunächst auf eine bestimmte Fahrgeschwindigkeit, z. B. 2 km/h, welche dem in Fig. 6 gezeigten Wert von 20% entspricht bzw. mit diesem korreliert ist.

Ersichtlich beabsichtigt der Bediener eine Erhöhung der Fahrgeschwindigkeit im Rahmen der Längs- und/oder Querführung, indem er zwischen den Zeitpunkten t1 und t2 eine zweite Bedienhandlung, d. h. wiederum Bezug nehmend auf das in Fig. 2 gezeigte Bedienelement 5, ein Drehen dieses um die Translationsachse 6 im Uhrzeigersinn, vornimmt, welche den in Fig. 6 gezeigten Wert von 20% auf 50% ansteigen lässt. Hiermit geht eine weitere Beschleunigung des Kraftfahrzeugs 1 auf eine Fahrgeschwindigkeit von ca. 4 km/h einher. Die mittels der Steuereinrichtung 3 durchzuführende, automatisierte Längs- und/oder Querführung des Kraftfahrzeugs 1 läuft daher mit einem im Vergleich zu dem mit der Einstellung "20%" korrelierten Geschwindigkeitsprofil anderen Geschwindigkeitsprofil mit höheren Fahrgeschwindigkeiten ab.

Wie aus Fig. 6 ersichtlich ist, ändert der Bediener die durch die zweite Bedienhandlung des Bedienelements 5 vorgenommene Änderung des Fahrparameters, d. h. die Erhöhung der Fahrgeschwindigkeit, bis zum Ende des Parkvorgangs, d. h. zum Zeitpunkt t5, nicht weiter. Befindet sich das Kraftfahrzeug 1 zum Zeitpunkt t5 in einem ordnungsgemäß geparkten Zustand, lässt der Bediener das Bedienelement 5 los und deaktiviert damit die Längs- und/oder Querführung.

Anhand der Fig. 7, 9 soll erläutert werden, wie die Längs- und/oder Querführung bei einem Zwischenfall, d. h. z. B. einem plötzlich in dem Fahrweg des Kraftfahrzeugs 1 erscheinenden Hindernis, erfolgt. Der Bediener erkennt das Hindernis kurz nach dem Zeitpunkt t3 und lässt zum Zwecke der sofortigen Deaktivierung der Längs- und/oder Querführung das Bedienelement 5 los, d. h. er hebt die zu dessen Aktivierung führende erste Bedienhandlung auf. Durch Aufhebung der ersten Bedienhandlung erfolgt ein sofortiges Abbremsen des Kraftfahrzeugs 1 in den Stillstand (vgl. Fig. 9).

Zu einem nachfolgenden, späteren zwischen den Zeitpunkten t3 und t4 liegenden Zeitpunkt, zu welchem sich der Bediener beispielsweise vergewissert hat, dass das Hindernis keine Gefahr einer Kollision mit dem Kraftfahrzeug 1 bedeutet, nimmt der Bediener die automatisierte Längs- und/oder Querführung wieder auf, indem er die erste Bedienhandlung am Bedienelement 5 durchführt. Der in Fig. 7 gezeigte y-Wert nimmt wieder die Voreinstellung von 20% ein. Durch eine zweite Bedienhandlung erhöht der Bediener wiederum die dem Geschwindigkeitsprofil für die automatisierte Längs- und/oder Querführung zugrunde liegenden Fahrgeschwindigkeiten. Der Parkvorgang respektive die Längs- und/oder Querführung wird wie mit Bezug auf die Fig. 6, 8 erläutert zu dem Zeitpunkt t5 beendet.

Für alle im Zusammenhang mit den Fig. 1 - 9 beschriebenen Ausführungsbeispiele gilt, dass das Bedienelement 5 wenigstens ein Ausgabemittel, d. h. z. B. eine Beleuchtungseinrichtung, einen Lautsprecher oder eine Vibrationseinrichtung, zur Ausgabe akustischer und/oder haptischer und/oder optischer Signale umfassen kann. Denkbar ist es alternativ oder ergänzend auch, dass das Bedienelement 5 zur Gabe entsprechender Signale mit kraftfahrzeugseitigen Ausgabemitteln, über welche akustische und/oder haptische und/oder optische Signale ausgebbar sind, gekoppelt ist, so dass entsprechende Signale nicht am Bedienelement 5, sondern über das Kraftfahrzeug 1 ausgegeben werden. Dem Bediener, d. h. insbesondere dem Fahrer, kann sonach im Rahmen der zumindest teilautomatisiert erfolgenden Längs- und/oder Querführung ein "Feed-Back" durch eine entsprechende Signalgabe gegeben werden.

Besonders zweckmäßig werden die Signale in Abhängigkeit einer entsprechenden Fahrzeugumfeldinformation ausgegeben. Die Signale können sonach der Warnung des Bedieners, d. h. insbesondere des Fahrers, vor möglichen Gefahrensituationen dienen. In diesem Zusammenhang kann die Intensität der Signale in Abhängigkeit der Fahrzeugumfeldinformation variiert werden, d. h. z. B. mit der Kritikalität der jeweiligen, durch die Fahrzeugumfeldinformation beschriebenen Gefahrensituation ansteigen.

## Patentansprüche

1. Kraftfahrzeug (1), umfassend eine Steuereinrichtung (3), die zur Steuerung einer zumindest teilautomatisierten Längs- und/oder Querführung des Kraftfahrzeugs (1) im Rahmen eines bestimmten Fahrmanövers ausgebildet ist, und wenigstens ein Bedienelement (5), das zur Kommunikation mit der Steuereinrichtung (3) und zur Gabe von die zumindest teilautomatisierte Längs- und/oder Querführung betreffenden Steuerinformationen an die Steuereinrichtung (3) ausgebildet ist, wobei die Steuereinrichtung (3) derart eingerichtet ist, dass über eine bedienerseitige erste Bedienhandlung am Bedienelement (5) eine Aktivierung oder eine Deaktivierung der Längs- und/oder Querführung steuerbar ist und über eine, insbesondere von der ersten Bedienhandlung unterschiedliche, zusätzliche bedienerseitige zweite Bedienhandlung am Bedienelement (5) wenigstens ein die durch die Steuereinrichtung (3) gesteuerte Längs- und/oder Querführung des Kraftfahrzeugs (1) beeinflussender Fahrparameter änderbar ist,
**dadurch gekennzeichnet,**
**dass** das Bedienelement (5) ein eine Rückstellkraft gegen die zweite Bedienhandlung ausbildendes Rückstellmittel umfasst, wobei die Rückstellkraft in Abhängigkeit einer durch eine mit der Steuereinrichtung (3) kommunizierende Fahrzeugumfeldsensorik (4), insbesondere während des Fahrmanövers, erfassten Fahrzeugumfeldinformation variierbar ist und/oder
**dass** das Bedienelement (5) ein Ausgabemittel zur Ausgabe akustischer und/oder haptischer und/oder optischer Signale umfasst oder das Bedienelement (5) zur Steuerung wenigstens eines kraftfahrzeugseitigen Ausgabemittels zur Ausgabe akustischer und/oder haptischer und/oder optischer Signale ausgebildet ist, wobei die Signale in Abhängigkeit einer durch eine oder die mit der Steuereinrichtung (3) kommunizierende Fahrzeugumfeldsensorik (4) erfassten Fahrzeugumfeldinformation ausgebbar sind, wobei die Intensität der Signale in Abhängigkeit der Fahrzeugumfeldinformation variierbar ist.

2. Kraftfahrzeug nach Anspruch 1,
**dadurch gekennzeichnet,**
**dass** die erste Bedienhandlung eine translatorische Bewegung des Bedienelements (5) entlang einer Translationsachse (6) ausgehend von einer Ausgangsposition in eine erste Bedienposition und die zweite Bedienhandlung eine Drehbewegung des in der ersten Bedienposition befindlichen Bedienelements (5) um die Translationsachse (6) oder eine andere Drehachse ist.

3. Kraftfahrzeug nach Anspruch 1,
**dadurch gekennzeichnet**,
die erste Bedienhandlung eine translatorische Bewegung des Bedienelements (5) entlang einer Translationsachse (6) ausgehend von einer Ausgangsposition in eine erste Bedienposition und die zweite Bedienhandlung eine gleichgerichtete translatorische Bewegung des Bedienelements (5) entlang der Translationsachse (6) ausgehend von der ersten Bedienposition ist.

4. Kraftfahrzeug nach Anspruch 1,
**dadurch gekennzeichnet,**
**dass** die erste Bedienhandlung eine translatorische Bewegung eines Bedienabschnitts (11) des Bedienelements (5) entlang einer Translationsachse ausgehend von einer Ausgangsposition in eine erste Bedienposition und die zweite Bedienhandlung eine Schwenkbewegung des Bedienelements (5) mit in der ersten Bedienposition befindlichem Bedienabschnitt (11) um einen Lagerpunkt (9) ausgehend von einer Ausgangsposition ist.

5. Kraftfahrzeug nach Anspruch 1,
**dadurch gekennzeichnet,**
**dass** die erste Bedienhandlung eine Bewegung auf eine erste Bedienposition (14) auf einer berührungssensitiven Bedienfläche (13) eines Bedienelements (5) und die zweite Bedienhandlung eine von der ersten Bedienposition (14) ausgehende Bewegung entlang der Bedienfläche (13) ist.

6. Kraftfahrzeug nach einem der vorangehenden Ansprüche,
**dadurch gekennzeichnet,**
**dass** die Steuereinrichtung (3) im Rahmen einer Änderung des Fahrparameters zur Berücksichtigung einer Grenzwertes für den Fahrparameter ausgebildet ist, welcher Grenzwert durch die zweite Bedienhandlung nicht überschritten werden kann.

7. Kraftfahrzeug nach einem der vorangehenden Ansprüche,
**dadurch gekennzeichnet,**
**dass** der Fahrparameter die Fahrgeschwindigkeit oder ein Geschwindigkeitsprofil des Kraftfahrzeugs (1) im Rahmen der zumindest teilautomatisierten Längs- und/oder Querführung ist.

8. Kraftfahrzeug nach Anspruch 6 und 7,
**dadurch gekennzeichnet,**
**dass** der Grenzwert eine Grenzfahrgeschwindigkeit ist, welche Grenzfahrgeschwindigkeit vorgegeben ist und/oder in Abhängigkeit einer durch eine oder die mit der Steuereinrichtung (3) kommunizierende Fahrzeugumfeldsensorik (4), insbesondere während des Fahrmanövers, erfassten Fahrzeugumfeldinformation anpassbar ist.

9. Kraftfahrzeug nach einem der vorangehenden Ansprüche,
**dadurch gekennzeichnet,**
**dass** das Bedienelement (5) kraftfahrzeugseitig verbaut oder, insbesondere in ein bedienerseitiges elektronisches Gerät, bevorzugt ein Smartphone, integriert, portabel ist.

10. Kraftfahrzeug nach einem der vorangehenden Ansprüche,
**dadurch gekennzeichnet,**
**dass** die Steuereinrichtung (3) derart konfiguriert ist, dass bei Durchführen der ersten Bedienhandlung stets ein vorgegebener Wert des Fahrbetriebsparameters voreingestellt ist.

11. Verfahren zum Betrieb eines Kraftfahrzeugs (1), umfassend eine Steuereinrichtung (3), die eine zumindest teilautomatisierte Längs- und/oder Querführung des Kraftfahrzeugs (1) im Rahmen eines bestimmten Fahrmanövers steuert, und wenigstens ein Bedienelement (5), das mit der Steuereinrichtung (3) kommuniziert und die zumindest teilautomatisierte Längs- und/oder Querführung betreffende Steuerinformationen an die Steuereinrichtung (3) gibt, wobei über eine erste bedienerseitige Bedienhandlung am Bedienelement (5) eine Aktivierung oder eine Deaktivierung der Längs- und/oder Querführung gesteuert wird und über eine, insbesondere von der ersten Bedienhandlung unterschiedliche, zusätzliche zweite bedienerseitige Bedienhandlung am Bedienelement (5) wenigstens ein den durch die Steuereinrichtung (3) gesteuerten Fahrbetrieb des Kraftfahrzeugs (1) beeinflussender Fahrparameter geändert wird,
**dadurch gekennzeichnet,**
**dass** das Bedienelement (5) ein eine Rückstellkraft gegen die zweite Bedienhandlung ausbildendes Rückstellmittel umfasst, wobei die Rückstellkraft in Abhängigkeit einer durch eine mit der Steuereinrichtung (3) kommunizierende Fahrzeugumfeldsensorik (4), insbesondere während des Fahrmanövers, erfassten Fahrzeugumfeldinformation variierbar ist und/oder
**dass** das Bedienelement (5) ein Ausgabemittel zur Ausgabe akustischer und/oder haptischer und/oder optischer Signale umfasst oder das Bedienelement (5) zur Steuerung wenigstens eines kraftfahrzeugseitigen Ausgabemittels zur Ausgabe akustischer und/oder haptischer und/oder optischer Signale ausgebildet ist, wobei die Signale in Abhängigkeit einer durch eine oder die mit der Steuereinrichtung (3) kommunizierende Fahrzeugumfeldsensorik (4) erfassten Fahrzeugumfeldinformation ausgebbar sind, wobei die Intensität der Signale in Abhängigkeit der Fahrzeugumfeldinformation variierbar ist.

## Claims

1. Motor vehicle (1) comprising a control device (3) which is designed to control an at least partially automated longitudinal and/or transverse assistance of the motor vehicle (1) in the context of a specific driving manoeuvre, and at least one operational element (5) which is designed to communicate with the control device (3) and to give control information concerning the at least partially automated longitudinal and/or transverse assistance to the control device (3), wherein the control device (3) is configured such that an activation or a deactivation of the longitudinal and/or transverse assistance is controllable by means of a first operational step carried out by the operator at the operational element (5), and that at least one driving parameter is modifiable, which influences the longitudinal and/or transverse assistance of the motor vehicle (1) controlled by the control device (3), by means of an additional, in particular different from the first operational step, second operational step carried out by the operator at the operational element (5).
**characterised in that**
the operational element (5) comprises a return means forming a return force against the second operational step, wherein the return force is variable depending on a vehicle environment information detected by a vehicle environment sensor system (4) which is in communication with the control device (3), in particular during the driving manoeuvre, and/or
that the operational element (5) comprises an output means for outputting acoustic and/or haptic and/or optical signals, or the operational element (5) is designed to control at least one output means on the motor vehicle side for outputting acoustic and/or haptic and/or optical signals, wherein the signals are to be outputted depending on a vehicle environment information detected by a vehicle environment sensor system or by the vehicle environment sensor system (4) which is in communication with the control device (3), wherein the intensity of the signals is variable depending on the vehicle environment information.

2. Motor vehicle according to claim 1
**characterised in that**
the first operational step is a translational movement of the operational element (5) along a translation axis (6) starting from a starting position into a first operating position and the second operational step is a rotatory movement, around the translation axis (6) or another rotatory axis, of the operational element (5) being in the first operating position.

3. Motor vehicle according to claim 1
**characterised in that**
the first operational step is a translational movement of the operational element (5) along a translation axis (6) starting from a starting position into a first operating position and the second operational step is a translational movement, in the same direction, of the operational element (5) along the translation axis (6) starting from the first operating position.

4. Motor vehicle according to claim 1
**characterised in that**
the first operational step is a translational movement of an operating section (11) of the operational element (5) along a translation axis starting from a starting position into a first operating position and the second operational step is a pivotal movement of the operational element (5) with operating section (11) being in the first operating position around a bearing point (9) starting from a starting position.

5. Motor vehicle according to claim 1
**characterised in that**
the first operational step is a movement to a first operating position (14) on a touch-sensitive operational surface (13) of an operational element (5) and the second operational step is a movement along the operational surface (13) starting from the first operating position (14).

6. Motor vehicle according to one of the preceding claims
**characterised in that**
the control device (3) is designed, in the context of an alteration of the driving parameter, to take into account a limit set on the driving parameter, which limit cannot be exceeded by the second operational step.

7. Motor vehicle according to one of the preceding claims
**characterised in that**
the driving parameter is the driving speed or a speed profile of the motor vehicle (1) in the context of the at least partially automated longitudinal and/or transverse assistance.

8. Motor vehicle according to claims 6 and 7,
**characterised in that**
the limit is a driving speed limit, which driving speed limit is predetermined and/or is adjustable dependent on a vehicle environment information detected by a vehicle environment sensor or the vehicle environment sensor (4) which communicates with the control device (3).

9. Motor vehicle according to one of the preceding claims
**characterised in that**
the operational element (5) is integrated into the motor vehicle or, in particular integrated into an electronic device carried by the operator, preferably a smartphone, is portable.

10. Motor vehicle according to one of the preceding claims
**characterised in that**
the control device (3) is configured such that when the first operational step is being carried out, a predetermined value of the driving operation parameter is always preinstalled.

11. Method for operating a motor vehicle (1) comprising a control device (3) which controls one at least partially automated longitudinal and/or transverse assistance of the motor vehicle (1) in the context of a particular driving manoeuvre, and at least one operational element (5) which communicates with the control device (3) and gives the control information regarding the at least partially automated longitudinal and/or transverse assistance to the control device (3), wherein an activation or a deactivation of the longitudinal and/or transverse assistance is controlled by a first operational step at the operational element (5) on the part of the operator and wherein at least one driving parameter influencing the driving operation of the motor vehicle (1), said operating parameter being controlled by the control device (3), is adjusted by an additional, in particular different from the first operational step, second operational step, carried out by the operator at the operational element (5),
**characterised in that**
the operational element (5) comprises a return means forming a return force against the second operational step, wherein the return force is variable depending on a vehicle environment information detected by a vehicle environment sensor system (4) which is in communication with the control device (3), in particular during the driving manoeuvre,
and/or
that the operational element (5) comprises an output means for outputting acoustic and/or haptic and/or optical signals, or the operational element (5) is designed to control at least one output means on the motor vehicle side for outputting acoustic and/or haptic and/or optical signals, wherein the signals are to be outputted depending on a vehicle environment information detected by a vehicle environment sensor system or by the vehicle environment sensor system (4) which is in communication with the control device (3), wherein the intensity of the signals is variable depending on the vehicle environment information.

## Revendications

1. Véhicule automobile (1), comprenant un dispositif de commande (3), qui est conçu pour la commande d'un guidage longitudinal et/ou transversal au moins partiellement automatisé du véhicule automobile (1) dans le cadre d'une manoeuvre de conduite déterminée, et au moins un élément de commande (5), qui est conçu pour la communication avec le dispositif de commande (3) et pour la délivrance d'informations de commande concernant le guidage longitudinal et/ou transversal au moins partiellement automatisé au dispositif de commande (3), dans lequel le dispositif de commande (3) est réalisé de telle sorte que, par l'intermédiaire d'une première action de commande côté utilisateur au niveau de l'élément de commande (5), une activation ou une désactivation du guidage longitudinal et/ou transversal peut être commandée et, par l'intermédiaire d'une deuxième action de commande supplémentaire côté utilisateur, en particulier différente de la première action de commande, au niveau de l'élément de commande (5), au moins un paramètre de conduite influençant le guidage longitudinal et/ou transversal du véhicule automobile (1) commandé par le dispositif de commande (3) peut être modifié,
**caractérisé en ce que**
l'élément de commande (5) comprend un moyen de rappel créant une force de rappel contre la deuxième action de commande, la force de rappel pouvant varier en fonction d'une information d'environnement de véhicule détectée, en particulier pendant la manoeuvre de conduite, par un capteur d'environnement de véhicule (4) communiquant avec le dispositif de commande (3),
et/ou
l'élément de commande (5) comprend un moyen de sortie destiné à la sortie de signaux acoustiques et/ou tactiles et/ou optiques ou l'élément de commande (5) est conçu pour la commande d'au moins un moyen de sortie côté véhicule automobile pour la sortie de signaux acoustiques et/ou tactiles et/ou optiques, les signaux pouvant être délivrés en sortie en fonction d'une information d'environnement de véhicule détectée par un ou le capteur d'environnement de véhicule (4) communiquant avec le dispositif de commande (3), l'intensité des signaux pouvant varier en fonction de l'information d'environnement de véhicule.

2. Véhicule automobile selon la revendication 1, **caractérisé en ce que** la première action de commande est un mouvement de translation de l'élément de commande (5) le long d'un axe de translation (6) à partir d'une position de départ jusque dans une première position de commande et la deuxième action de commande est un mouvement de rotation de l'élément de commande (5) se trouvant dans la première position de commande autour de l'axe de translation (6) ou d'un autre axe de rotation.

3. Véhicule automobile selon la revendication 1, **caractérisé en ce que** la première action de commande est un mouvement de translation de l'élément de commande (5) le long d'un axe de translation (6) à partir d'une position de départ jusque dans une première position de commande et la deuxième action de commande est un mouvement de translation de même sens de l'élément de commande (5) le long de l'axe de rotation (6) à partir de la première position de commande.

4. Véhicule automobile selon la revendication 1, **caractérisé en ce que** la première action de commande est un mouvement de translation d'une partie de commande (11) de l'élément de commande (5) le long d'un axe de translation à partir d'une position de départ jusque dans une première position de commande et la deuxième action de commande est un mouvement de pivotement de l'élément de commande (5) avec la partie de commande (11) se trouvant dans la première de position de commande autour d'un point de support (9) à partir d'une position de départ.

5. Véhicule automobile selon la revendication 1, **caractérisé en ce que** la première action de commande est un mouvement jusqu'à une première position de commande (14) sur une surface de commande tactile (13) d'un élément de commande (5) et la deuxième action de commande est un mouvement partant de la première position de commande (14) le long de la surface de commande (13).

6. Véhicule automobile selon l'une quelconque des revendications précédentes, **caractérisé en ce que** le dispositif de commande (3) est conçu, dans le cadre d'une modification du paramètre de conduite, pour la prise en compte d'une valeur limite pour le paramètre de conduite, laquelle valeur limite ne peut pas être dépassée par la deuxième action de commande.

7. Véhicule automobile selon l'une quelconque des revendications précédentes, **caractérisé en ce que** le paramètre de conduite est la vitesse de conduite ou un profil de vitesse du véhicule automobile (1) dans le cadre du guidage longitudinal et/ou transversal au moins partiellement automatisé.

8. Véhicule automobile selon les revendications 6 et 7, **caractérisé en ce que** la valeur limite est une vitesse de conduite limite, laquelle vitesse de conduite limite est prédéterminée et/ou peut être adaptée en fonction d'une information d'environnement de véhicule détectée, en particulier pendant la manoeuvre de conduite, par un ou le capteur d'environnement de véhicule (4) communiquant avec le dispositif de commande (3).

9. Véhicule automobile selon l'une quelconque des revendications précédentes, **caractérisé en ce que** l'élément de commande (5) est embarqué côté véhicule automobile ou est portable, intégré en particulier dans un appareil électronique côté utilisateur, de préférence un smartphone.

10. Véhicule automobile selon l'une quelconque des revendications précédentes, **caractérisé en ce que** le dispositif de commande (3) est configuré de telle sorte que, lors de l'exécution de la première action de commande, une valeur prédéterminée du paramètre de conduite est toujours préalablement réglée.

11. Procédé de fonctionnement d'un véhicule automobile (1), comprenant un dispositif de commande (3), qui commande un guidage longitudinal et/ou transversal au moins partiellement automatisé du véhicule automobile (1) dans le cadre d'une manoeuvre de conduite déterminée, et au moins un élément de commande (5), qui communique avec le dispositif de commande (3) et qui délivre des informations de commande concernant le guidage longitudinal et/ou transversal au moins partiellement automatisé au dispositif de commande (3), dans lequel, par l'intermédiaire d'une première action de commande côté utilisateur au niveau de l'élément de commande (5), une activation ou une désactivation du guidage longitudinal et/ou transversal est commandée et, par l'intermédiaire d'une deuxième action de commande supplémentaire côté utilisateur, en particulier différente de la première action de commande, au niveau de l'élément de commande (5), au moins un paramètre de conduite influençant la conduite du véhicule automobile (1) commandée par le dispositif de commande (3) est modifié,
**caractérisé en ce que**
l'élément de commande (5) comprend un moyen de rappel créant une force de rappel contre la deuxième action de commande, la force de rappel pouvant varier en fonction d'une information d'environnement de véhicule détectée, en particulier pendant la manoeuvre de conduite, par un capteur d'environnement de véhicule (4) communiquant avec le dispositif de commande (3),
et/ou
l'élément de commande (5) comprend un moyen de sortie destiné à la sortie de signaux acoustiques et/ou tactiles et/ou optiques ou l'élément de commande (5) est conçu pour la commande d'au moins un moyen de sortie côté véhicule automobile pour la sortie de signaux acoustiques et/ou tactiles et/ou optiques, les signaux pouvant être délivrés en sortie en fonction d'une information d'environnement de véhicule détectée par un ou le capteur d'environnement de véhicule (4) communiquant avec le dispositif de commande (3), l'intensité des signaux pouvant varier en fonction de l'information d'environnement de véhicule.
